## Europäisches Patentamt

## European Patent Office

## Office européen des brevets

(11) Veröffentlichungsnummer: **0 285 551**
**A2**

## EUROPÄISCHE PATENTANMELDUNG

(21) Anmeldenummer: **88810048.4**

(22) Anmeldetag: **29.01.88**

(51) Int. Cl.⁴: **B 29 C 45/23**

(30) Priorität: **02.04.87 CH 1268/87**

(43) Veröffentlichungstag der Anmeldung:
**05.10.88 Patentblatt 88/40**

(84) Benannte Vertragsstaaten: **AT DE FR GB NL**

(71) Anmelder: **Herzog, Kurt**
**Sennrüti 7**
**CH-9113 Degersheim (CH)**

(72) Erfinder: **Herzog, Kurt**
**Sennrüti 7**
**CH-9113 Degersheim (CH)**

(74) Vertreter: **White, William et al**
**Isler AG Patentanwalts-Bureau Walchestrasse 23**
**CH-8006 Zürich (CH)**

(54) **Einspritzdüse für thermoplastischen Kunststoff.**

(57) Der Düsenkörper (1) ist in üblicher Weise mit einem Verschlusskopf (2) verschlossen, der eine Düsenöffnung (2a) besitzt. Eine Düsennadel (3) verschliesst die Düsenöffnung (2a) in der Schliess-Stellung. Sie ist in einem Nadellager (4) axialbeweglich geführt. In einer schlitzartigen Ausnehmung (4e) im Nadellager (4) ist ein Betätigungshebel (6) eingesetzt und mittels einer Lagerkugel (7) an der Rückwand des Nadellagers (4) abgestützt. Ein fliegend zwischen Düsennadel (3) und Betätigungshebel (6) eingesetzter Hubübertragungsbolzen (5) dient zur Uebertragung der Schliesskraft vom Betätigungshebel (6) zur Düsennadel (3). Beim Oeffnen drückt der Spritzdruck die Düsennadel (3) nach hinten, wenn der Betätigungshebel (6) in die Offenstellung gedreht wird. Damit kann eine Schliessfeder entfallen und damit muss durch die Spritzkraft keine Kraft entgegen der Federkraft bewirkt werden.

Fig. 1

EP 0 285 551 A2

## Beschreibung

### Einspritzdüse für thermoplastischen Kunststoff

Die vorliegende Erfindung betrifft eine Einspritzdüse gemäss dem Oberbegriff des Patentanspruchs 1.

Die CH-A-587 718 zeigt eine Einspritzdüse mit federbelasteter Düsennadel, die sich unter der Einwirkung der unter Einspritzdruck stehenden Schmelze automatisch öffnet. Es hat sich als nachteilig erwiesen, dass der Spritzdruck verwendet werden muss, um die Düsennadel entgegen der Kraft einer Schliessfeder zu bewegen, weil daraus ein Druckverlust resultiert. Ausserdem hat eine solche Düse eine um die Federlänge vergrösserte Einbaulänge, die durch den notwendigen Adapter für einen statischen Mischer oder Filterelement noch zusätzlich in nachteiliger Weise verlängert ist. Es ist deshalb eine Aufgabe, eine Einspritzdüse zu schaffen, bei der die Düsennadel ohne Druckverlust im Spritz material zurückbewegt werden kann und bei der die Einbaulänge wesentlich verkürzt ist.

Erfindungsgemäss wird dies mit den Merkmalen im kennzeichnenden Teil des Anspruchs 1 erreicht.

Nachfolgend wird die Erfindung anhand eines Ausführungsbeispiels erläutert. In der Zeichnung zeigen:

Fig. 1 eine Schnittansicht eines Längsschnittes durch die Düse mit der Düsennadel in Schliess-Stellung,

Fig. 2 dieselbe Schnittansicht wie Fig. 1, aber mit der Düsennadel in Offenstellung, und

Fig. 3 eine Schnittansicht quer durch die Düse gemäss der Schnittlinie III-III in Fig. 2.

In einem Düsenkörper 1 in äusserlich gleicher Form wie der aus der CH-A-587 718 bekannte Düsenkörper ist durch einen ebenfalls bekannten Verschlusskopf 2 mit einer Düsenöffnung 2a verschlossen. Der Verschlusskopf 2 ist dabei in den Hohlraum des Düsenkörpers 1 eingeschraubt.

Eine Düsennadel 3 mit einer Düsenspitze 3a, einer Nadel schulter 3c, einem Führungsschaft 3b und eine kugelkalottenförmige Vertiefung 3c am Hinterteil vom Führungsschaft 3b.

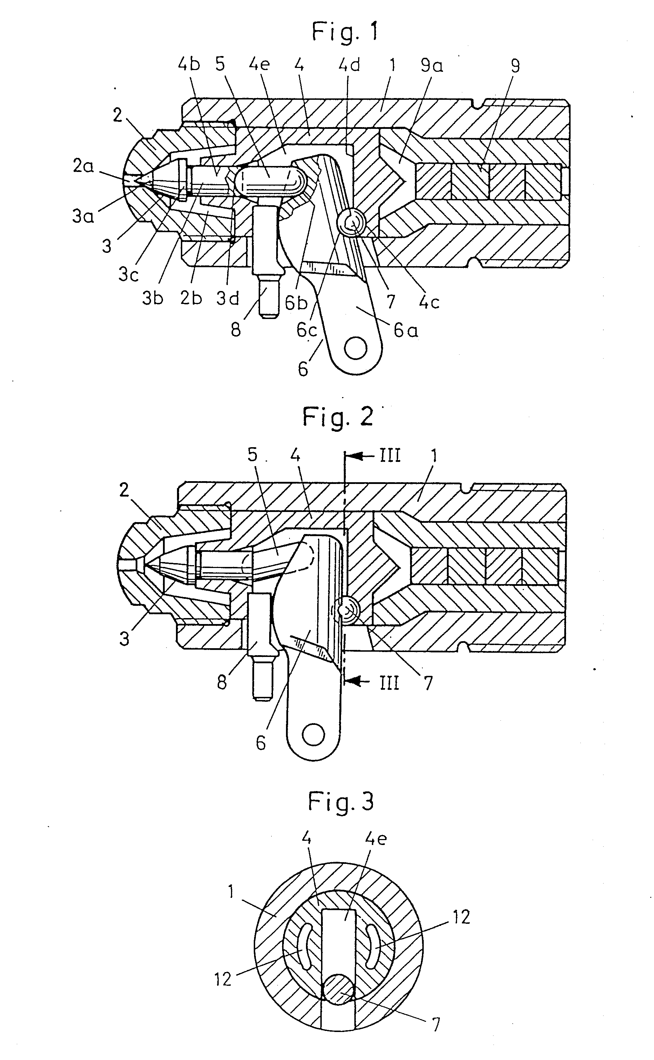

Der Nadelschaft 3b ist axialverschiebbar in einer Bohrung 4b eines Nadellagers 4 geführt. Das Nadellager ist gemäss Fig. 3 ein zylindrischer Körper mit einer schlitzartigen Ausnehmung 4e, die durch eine Hinterwand 4d gegen den Zuführungsgang 9a für die Schmelze abgeschlossen ist und zwei bananenförmige Schlitze 12 für die Durchleitung der Schmelze in den im Verschlusskopf befindlichen Druckraum 2b besitzt.

In der schlitzartigen Ausnehmung 4e befindet sich ein Betätigungshebel 6 mit einer nach aussen vorstehenden Betätigungszunge 6a. Der Betätigungshebel 6 besitzt düsennadelseitig eine erste kugelkalottenförmige Vertiefung 6b und an seiner Rückseite eine zweite kugelkalottenförmige Vertiefung 6c die mit einer weiteren solchen Vertiefung 4c in der Hinterwand 4d fluchtet und zur Aufnahme einer Lagerkugel 7 dient.

Wie Fig. 1 zeigt, fluchtet die erste kugelkalottenförmige Vertiefung 6b mit der kugelkalottenförmigen Vertiefung 3d am Führungsschaft 3b in Schliess-Stellung mit der Achse der Düsennadel 3. In diese beiden Ausnehmungen 3d,6b ist ein Hubübertragerbolzen 5 fliegend eingesetzt.

Die Fixierung des Betätigungshebels 6 im Schlitz 4e des Nadellagers 4 geschieht mit einem Positionierungsstift 8, der aussenseitig am Heizband (nicht dargestellt) ansteht. Nach Herausnahme dieses Positionierungsstiftes 8 und nach Entfernung des Verschlusskopfes 2 und der Düsennadel 3 sowie des Hubübertragerbolzens 5 kann der Betätigungshebel 6 herausgezogen werden.

Zum Oeffnen der Düsenöffnung 2a wird der Betätigungshebel 6 nach vorn in die Lage gemäss Fig. 2 geschoben. Mit dem Spritzdruck, der auf den konischen Teil der Düsennadel 3 einwirkt, wird gleichzeitig die Düsennadel 3 und der Hubübertragungsbolzen 5 aus der Schliesslage herausbewegt. Vom Spritzdruck wird daher nur ein ganz geringer Teil zum Oeffnen der Düse benötigt.

Zum Schliessen wird der Betätigungshebel 6 in die Stellung gemäss Fig. 1 bewegt, wodurch der Hubübertragungsbolzen 5 die Düsennadel 3 in die Schliesslage bewegt.

Durch das Entfallen einer Schliessfeder ergibt sich im Düsenkörper 1 ein freier Raum (9) hinter dem Nadellager 4. In diesem Raum kann bequem ein statischer Mischer, ein Filter element oder beides in Kombination eingesetzt werden, wodurch ein zusätzlicher Adapter entfällt und damit die Einbaulänge verkürzt ist.

### Patentansprüche

1. Einspritzdüse für thermoplastischen Kunststoff verarbeitende Spritzgiessmaschinen mit einer im Düsenkörper (1) axial verschiebbaren Düsennadel (3), dadurch gekennzeichnet, dass die Düsennadel (3), die in einem Nadellager (4) axialverschiebbar gelagert ist, an ihrem der Nadelspitze (3a) abgewandten Endteil eine kugelkalottenförmige Vertiefung (3d) aufweist, dass ein Betätigungshebel (6) mit einer nach aussen vorstehenden Betätigungszunge (6a) drehbeweglich im Nadellager (4) gelagert ist und auf der gegen die Düsennadel (3) gerichteten Partie eine ebenfalls kugelkalottenförmige Vertiefung (6b) aufweist, und dass zwischen der kugelkalottenförmigen Vertiefung (3d) in der Düsennadel (3) und der kugelkalottenförmigen Vertiefung (6b) im Betätigungshebel (6) ein Hubübertragerbolzen (5) eingesetzt ist.

2. Düse nach Patentanspruch 1, dadurch gekennzeichnet, dass die Düsennadel (3) auf ihrer an den Führungsschaft (3b) anschliessenden Seite (3c) abgesetzt ist, und dass das Nadellager (4) an der Nadeldichtfläche (4a) auf die Aussenform der Nadelschulter (3c) verjüngt ist.

3. Düse nach Patentanspruch 1 oder 2, dadurch gekennzeichnet, dass die kugelkalottenförmigen Vertiefungen (3d,6b) einerseits im Führungsschaft (3b) der Düsennadel (3) und anderseits im Betätigungshebel (6) in geschlossenem Zustand der Düse in axialer Richtung der Düsennadel (3) aufeinander ausgerichtet sind.

4. Düse nach einem der Patentansprüche 1 bis 3, dadurch gekennzeichnet, dass der Betätigungshebel (6) an seiner der Düsennadel (3) abgekehrten Seite mittels einer Lagerkugel (7) an der Hinterwand (4d) des Nadellagers (4) abgestützt ist.

5. Düse nach Patentanspruch 4, dadurch gekennzeichnet, dass die Lagerkugel (7) sowohl im Betätigungshebel (6) als auch in der Hinterwand (4d) des Nadellagers (4) in kugelkalottenförmigen Vertiefungen (6c,4c) liegt.

6. Düse nach Patentanspruch 5, dadurch gekennzeichnet, dass das Nadellager (4) Durchströmöffnungen (12) für den Durchgang der Schmelze aufweist.

7. Düse nach einem der Patentansprüche 1 bis 6, dadurch gekennzeichnet, dass im Düsenkörper (1) im freien Raum (9) ein statischer Schmelzmischer, ein Filterelement oder beides in Kombination angeordnet werden kann.

0285551

## Fig. 1

## Fig. 2

## Fig. 3